Europäisches Patentamt

(19) European Patent Office (11) Publication number: **0 097 368**

Office européen des brevets **A2**

(12) # EUROPEAN PATENT APPLICATION

(21) Application number: **83106065.2**

(22) Date of filing: **21.06.83**

(51) Int. Cl.³: **G 06 K 11/06**

(30) Priority: **21.06.82 US 390518**

(43) Date of publication of application:
**04.01.84 Bulletin 84/1**

(84) Designated Contracting States:
**CH DE FR GB IT LI SE**

(71) Applicant: **INDUSTRIAL ELECTRONIC ENGINEERS INC.**
**7740 Lemona Avenue**
**Van Nuys California 91405(US)**

(72) Inventor: **Elad, Moshe**
**2013, Selby Avenue**
**Westwood California 90025(US)**

(72) Inventor: **Feldberg, Lance**
**28108 Juneda Drive**
**Saugus, California 91350(US)**

(72) Inventor: **Gumpertz, Donald G.**
**4217, Navajo Street**
**Toluca Lake, California 91602(US)**

(74) Representative: **Baillie, Iain Cameron et al,**
**c/o Ladas & Parry Isartorplatz 5**
**D-8000 München 2(DE)**

(54) **Position indicator.**

㉝ A tablet is provided with a thin film on a surface, preferably a flat surface. The thin film has characteristics to provide a uniform resistance, preferably of a relatively low value, across the tablet. A flexible membrane is disposed in spaced, but contiguous, relationship to the thin film and is provided with a thin conductive layer defining a ground plane. The membrane is capable of being flexed into contact with the thin film at any desired position.

A voltage having a floating reference is applied to the thin film by a voltage source having its opposite terminals floating relative to ground. Means such as diodes may be disposed at spaced intervals along the periphery of the thin film for providing for a progressive voltage only in particular vectors along first and second co-ordinate axes. Means are responsive to the progressive voltages respectively produced along the first and second axes for indicating the position of contact between the ground plane and the thin film. Such means may be responsive to the position of the ground produced on the thin film by contact with the ground plane, such ground position on the thin film controlling the voltages provided by the opposite terminals of the voltage source relative to ground.

The apparatus of this invention provides output indications of the position of contact between the thin film and the ground plane only when a contact has been provided on a positive basis. This is accomplished by providing for a sequence of progressive indications of the output voltage along each of the first and second axes. Output voltages representing the position of contact between the thin film and the ground plane are produced only when the progressive voltages in each sequence differ from one another by less than a particular amount.

Fig. 3

POSITION INDICATOR

TECHNICAL FIELD

This invention relates to apparatus for indicating selective positions and more particularly relates to apparatus for indicating such selective positions in a simple and reliable manner.

BACKGROUND OF THE INVENTION

Apparatus is now in use which is programmed to perform certain functions which are selected by the subscriber. For example, the subscriber may have certain choices which are located at different positions on a screen. The subscriber may make an individual selection of such functions by pressing the portion of the screen where his choice is located. For example, multiple choices to a question may be located at different positions on a screen. A subscriber may select his answer by pressing the position on the screen where the answer is positioned.

In order to provide a proper indication of the function selected, the different positions on the screen have to be indicated with precision and reliability. This has not been easy. For example, the apparatus incorporating the screen has not been able to distinguish between a positive choice of a function by a subscriber and a tentative choice of such function by the subscriber. The apparatus has also not been able to indicate precisely the particular function selected by the subscriber even when the selection has been positively made by the subscriber.

Considerable work has been performed over a relatively long period of time to provide apparatus which will be simple, reliable and inexpensive and which will provide a positive and accurate indication of the position selected by a subscriber on a screen.

-2-

In spite of such efforts, apparatus meeting the criteria specified above still does not exist. Such apparatus still does not exist in spite of the considerable advances which have been made in the field of electronics during this period of time.

BRIEF DESCRIPTION OF THE INVENTION

This invention provides apparatus which overcomes the above difficulties. The invention involves apparatus which provides a positive and accurate indication of the position selected by a subscriber on a screen. Furthermore, the apparatus distinguishes between a positive selection of a screen position by the subscriber and a tentative selection of such position by the subscriber. The apparatus of this invention is also simple, reliable and inexpensive.

In one embodiment of the invention, a tablet is provided with a thin film on a surface, preferably a flat surface. The thin film has characteristics to provide a uniform resistance, preferably of a relatively low value, across the tablet. A flexible membrane is disposed in spaced, but contiguous, relationship to the thin film and is provided with a thin, conductive layer defining a ground plane. The membrane is capable of being flexed into contact with the thin film at any desired position.

A voltage having a floating relationship is applied to the thin film. Means such as diodes may be disposed at spaced intervals along the periphery of the thin film for providing for progressive voltages only in particular vectors along first and second co-ordinate axes. Means are responsive to the progressive voltages respectively produced along the first and second axes for indicating the position of

-3-

contact between the thin film and the ground plane. Such means may be responsible to the position of the ground produced on the thin film by contact with the ground plane, such ground position on the thin film controlling the voltages provided by the opposite terminals of the voltage source relative to the ground.

The apparatus of this invention provides output indications of the position of contact between the thin film and the ground plane only when a contact has been provided on a positive basis. This is accomplished by providing for a sequence of progressive indications of the output voltage along each of the first and second axes. Output voltages representing the position of contact between the thin film and the ground plane are produced only when the progressive voltages in each sequence differ from one another by less than a particular amount.

BRIEF DESCRIPTION OF THE DRAWINGS

Figure 1 is a side elevational view schematically illustrating one embodiment of the invention;

Figure 2 is a front elevational view illustrating a tablet included in the embodiment shown in Figure 1;

Figure 3 is a schematic view illustrating the tablet shown in Figure 2 and further illustrating electrical circuitry associated with the tablet for indicating a position selected on the tablet along two co-ordinate axes;

Figure 4 is a circuit diagram further illustrating schematically electrical features included in the embodiment of the invention;

Figure 5 is a curve illustrating how the voltage produced at the selected position may change with time and further illustrating the desirability of distinguishing between positive and tentative selections of positions on the tablet by the operator;

Figure 6 is a schematic block diagram of an electrical system for distinguishing between positive and tentative selections of positions on the tablet by an operator; and

Figure 7 is a curve indicating the comparison made by certain stages shown in Figure 6 to indicate whether a voltage is within limits of +m and −m.

DETAILED DESCRIPTION

In one embodiment of the invention, a tablet generally indicated at 10 is formed from a suitable material such as glass. However, the tablet 10 may be made from a suitable flexible material, such as that designated as "Mylar" by E.I. Dupont de Nemours of Wilmington, Delaware, and may be disposed on a firm backing. The tablet is preferably provided with a pair of flat planar surfaces, a particular one of which is designated as 12. A suitable material such as indium tin oxide is deposited in a uniformly thin layer on the surface 12 such as in a layer 14 of approximately three hundred angstroms (300Å). The indium tin oxide provides a resistance such as in the order of two hundred (200) ohms between opposite extremities of the tablet along each of two co-ordinate axes. Although a thin film with a resistivity of two hundred (200) ohms is preferable, thin films with resistivities as high as one thousand (1000) ohms may also be used.

Unidirectional members are connected to one periphery of the layer 14 at spaced positions along the periphery. The members may constitute diodes 16 disposed on the periphery of the layer 14 at uniformly spaced positions to contact such layer and form electrical circuitry with such layer. By way of illustration, the diodes 16 may be spaced from one another along the periphery of the layer 14 by a suitable distance such as approximately 1.25 cm (1/2"). Similarly, unidirectional members such as diodes 18 are disposed along the opposite periphery of the layer 14. Unidirectional members such as diodes 20 and 22 are disposed at spaced intervals along the other two (2) peripheries of the layer 14.

An active membrane, generally indicated at 30, may be formed from a relatively thin layer such as "Mylar". For example, the membrane 30 may be provided with a thickness of 0.12 mm (0.005") to 0.18 mm (0.007"). In view of this, the membrane 30 is provided with flexible characteristics. The membrane 30 is coated on one of its surfaces with a layer 32 of a suitable material such as gold to define a ground plane. The layer 32 may be provided with a suitable thickness such as three hundred angstroms (300Å).

The membrane 30 is disposed in contiguous, but spaced, relationship to the tablet 10 with the layer 32 facing the layer 14. The spacing may be provided by a plurality of glass beads 34 which are attached to the membrane 30 at spaced positions such as approximately 7 mm (1/4"). The glass beads 34 may be provided with a diameter of 0.05 mm (0.002") to 0.18 mm (0.007"). Although the use of spacers to maintain a controlled separation between the tablet 10 and the membrane 30 is preferable, it will be appreciated that such controlled separation may be maintained without the use of spacers.

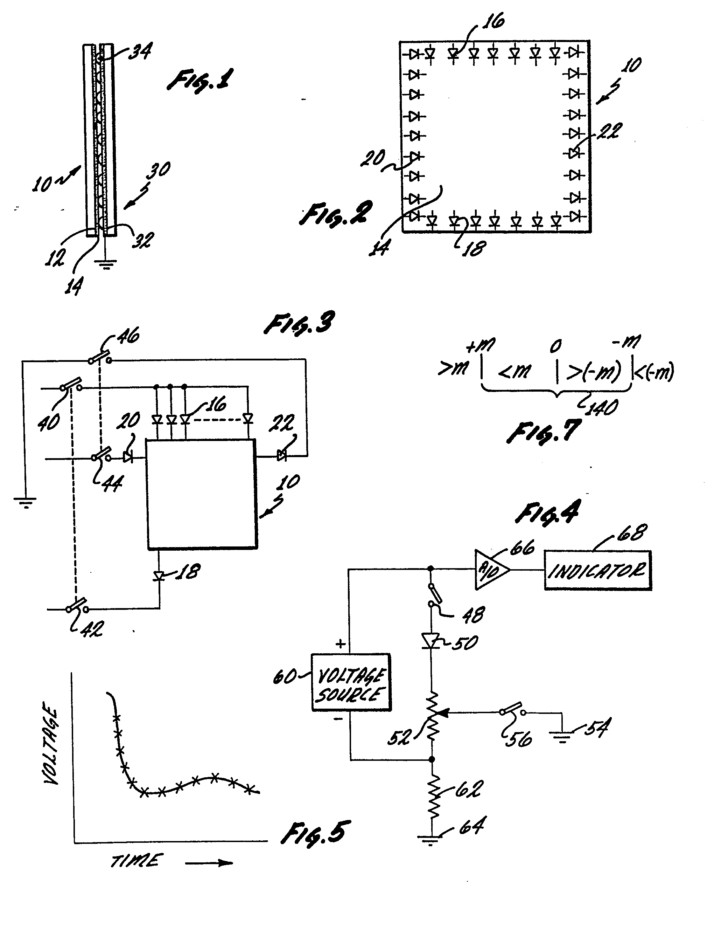

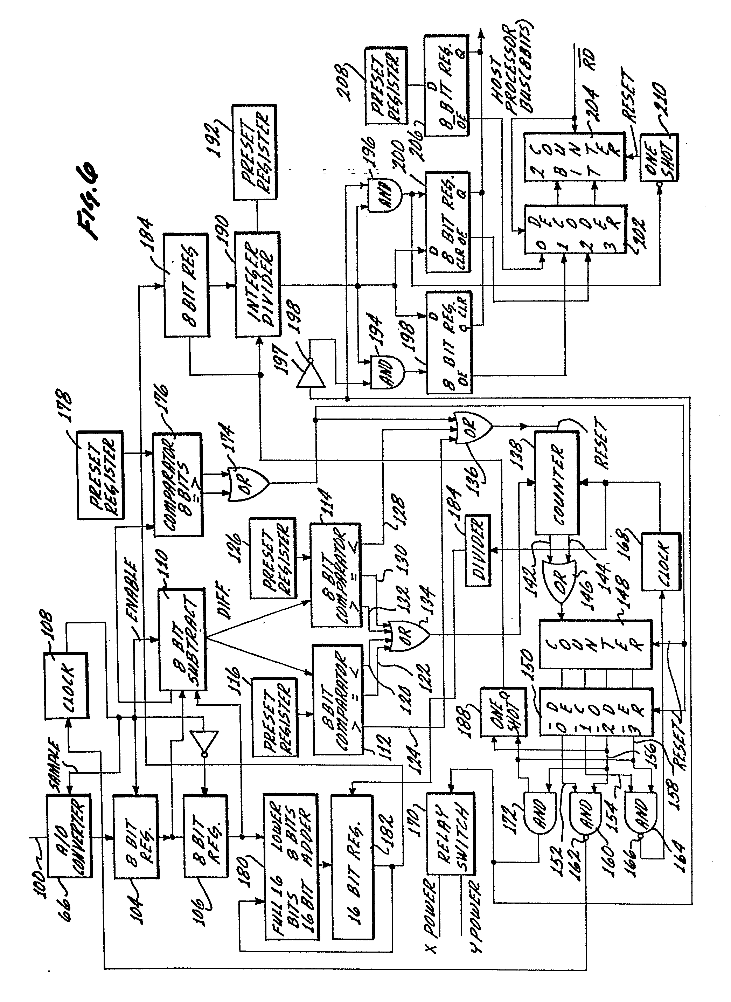

Switches 40, 42, 44 and 46 are respectively connected to the diodes 16, 18, 20 and 22, which are shown schematically in Figure 3 as being displaced from the tablet 10. The switches 40 and 42 are ganged as are the switches 44 and 46. The switches 40 and 42 or the switches 44 and 46 are schematically represented at 48 in Figure 4, and the diodes 16 and 18 or the diodes 20 and 22 are schematically represented at 50 in Figure 4. The layer 14 is schematically shown as a resistance 52 in Figure 4 and the layer 32 defining a ground plane is schematically shown as a ground 54 in Figure 4. A switch 56 is also included on a schematic basis in Figure 4 to establish schematically the contact produced between the layers 14 and 32 when the membrane 30 is pressed toward the tablet 10. Since the position of contact is variable, this may be indicated in Figure 4 by considering the resistance 52 to have a movable contact connected to the switch 56.

A voltage source 60 is also included in Figure 4 to provide a suitable direct voltage such as approximately five volts (5V). The voltage source 60 may be considered to provide a floating reference relative to ground. The voltage source 60 is connected in a series circuit with the schematic switch 48, the schematic diode 50 and the schematic resistance 52. A resistance 62 having a suitable value as approximately forty-seven Kilohms (47K) is connected between the negative terminal of the voltage source 60 and a ground 64. The resistance 62 preferably has a value at least one hundred (100) times greater than the resistance value of the layer 14. An analog-to-digital converter 66 is connected to the positive terminal of the voltage source 60 and the output of the converter 66 is in turn introduced to an indicator 68.

When the membrane 30 is pressed against the tablet 10, contact is established between the layers 14 and 32. This is equivalent to a closure of the switch 56 in Figure 3 and to an introduction of the ground 54 to the movable arm of the resistance 52 defining the layer 14. This causes a ground to be established at the movable arm of the resistance 52 such that a portion of the resistance 52 has a potential above ground and a portion of the resistance 52 has potential below ground. This means that the voltage on the positive terminal of the voltage source 60 is dependent upon the position grounded in the resistance 52. This voltage has a value of +5 volts when the movable arm of the resistance 52 engages the lowermost position of the resistance in Figure 4. The voltage on the positive terminal of the voltage source 60 has a ground potential when the movable arm of the resistance 52 engages the uppermost position of the resistance in Figure 4.

The voltage on the positive terminal of the voltage source 60 is converted to a digital form by the converter 66 and a digital indication is provided by the indicator 68. Dependent upon whether the switches 40 and 42 are closed or the switches 44 and 46 are closed, the output indication represents the position of contact between the layers 14 and 32 vectorially along the vertical axis or the horizontal axis.

The apparatus disclosed above has certain important advantages. It provides for the production of a ground on the thin layer or film 14 by contact between the layers 14 and 32. This ground is established by a relatively simple interrelationship between the tablet 10 and the membrane 30. It also provides a relatively simple circuit, including the layers 14 and 32, for producing an output indication of the position of contact between the layers 14 and 32. This relatively simple arrangement is provided by the voltage dividing

-8-

network formed by the resistance 52, including the movable arm of the resistance, and by the floating relationship of the voltage source 60 to ground. Furthermore, the grounding of the layer 32 acts as a shield to prevent any radio frequency (RF) signals from interfering with the operation of the system.

Figure 6 is a schematic diagram in block form of electrical apparatus for indicating the position of contact between the tablet 10 and the membrane 32 only when a positive selection has been made by the operator of a position on the tablet 10. In the embodiment shown in Figure 6, the analog voltage produced on the positive terminal of the voltage source 60 relative to ground is indicated at 100. This voltage is introduced to the analog-to-digital converter 66 also shown in Figure 3. The digital output from the analog-to-digital converter 66 is in turn introduced to a register 104 which may have a suitable capacity such as 8 bits. The output from the register 104 is in turn introduced after one clock pulse to a register 106 preferably having the same digital capacity as the register 104. The operation of the converter 66 and the registers 104 and 106 is synchronized by clock pulses from a gated clock 108.

The outputs from the registers 104 and 106 are introduced to a subtractor 110, which provides output signals digitally indicating the voltage difference on the line 100 in successive clock pulses. This voltage difference is introduced to comparators 112 and 114. The comparator 112 also receives an input voltage from a preset register 116 which indicates a positive limit such as a limit M. This limit is shown schematically in Figure 7. The comparator 112 compares the difference value from the subtractor 110 with the preset value M and provides signals on lines 120, 122 and 124 respectively indicating whether the difference is less than, equal to or greater than the preset value M.

In like manner, the difference signal from the subtractor 110 is compared in the comparator 114 with a preset value provided in a register 126. This preset value is -M. The comparator 114 provides output signals on lines 128, 130 and 132 respectively indicating whether the difference is less than, equal to or greater than the preset value -M.

The signals on the lines 120, 122, 130 and 132 are introduced to an OR network 134. The OR network 134 accordingly becomes activated to pass a signal to a counter 138 when the signal from the comparators 112 and 114 are within the limit of ±M as indicated at 140 in Figure 7. However, an OR network 142 becomes activated when the signals from the comparators 112 and 114 are outside of the limit 140 in Figure 7.

Every time that the OR network 134 becomes activated, the count in a counter 138 is increased by one integer. The counter provides a full count when it has been successively activated by the OR network 136 through N successive clock signals. The counter 138 becomes reset to zero upon an activation of the OR network 136. The OR network 136 becomes activated upon the introduction of a signal from one of the lines 124 and 128 to indicate that the comparison between the difference value in the subtractor 110 and the preset value in the register 116 or the comparison between the difference value in the subtractor 110 and the present value in the register 126 is outside of the range 140 as shown in Figure 7.

The counter 138 respectively provides signals on lines 142 and 144 when the counter has either a full count of N or a zero count. The signals on the lines 142 and 144 are introduced to an OR network 146 which is connected to a counter 148. The counter 148 provides a count of particular values such as between "0" and "3".

The output from the counter 148 is in turn introduced to a decoder 150 which decodes the signals from the counter 148 to provide outputs on lines 152, 154, 156 and 158. The line 152 provides signals when the count is other than "0" and the line 156 provides signals for counts other than "2". The lines 154 and 158 respectively pass signals for counts other than "1" and "3".

The signals on the lines 152 and 156 are introduced to the input terminals of an AND network 160. The output of the AND network 160 is connected to an inverter 162 whose output is connected to the clock 108. Similarly, the lines 154 and 158 are connected to the input terminals of an AND network 164 having its output terminal connected to an invertor 166. The output from the inverter 166 is introduced to the gated clock 168 to activate the clock.

When the system shown in Figure 5 first becomes operative, the counter 148 has a count of "0". This causes the "and" network 160 and the inverter 162 to operate in producing a signal for activating the clock 108. The comparators 112 and 114 accordingly become operative to pass signals through the OR network 136 to the counter 138 when the difference from the subtractor 110 in successive clocks is within the particular limits 140 in Figure 7.

Upon the passage of signals through the OR network 134 in the successive clock cycles, the counter 138 becomes full. This causes a signal to pass through the line 142 and the OR network 146 to the counter 148 to increase the count in the counter from "0" to "1". The AND network 164 and the inverter 166 then become operative so that a high output is obtained from the inverter 166. As a result, the gated clock 168 is activated to produce a count downwardly in the counter 138 of the successive clock signals passing through the gated clock. When the count in the counter 138 has reached a value of "0", a signal passes through the line 144 and the OR network 146 to the counter 148 to increase the count in the counter from a value of "1" to a value of "2".

The AND network 160 becomes deactivated upon a count of "2" in the counter 148 to obtain a signal from the inverter 162 for again activating the gated clock 108. When the difference in the successive clock cycles is within the limit 140 in Figure 7, signals pass through the OR network 136 to the counter 138 in successive cycles of the clock signal. The counter 138 counts these successive signals through N counts and introduces a signal through the line 142 and the OR network 146 to the counter 148 to increase the count in the counter 148 from a value of "2" to a value of "3". The gated clock 168 then becomes activated to produce a count downwardly of N counts in the counter 138. Upon a count of "0" in the counter 138, the counter 148 becomes triggered to increase the count in the counter 148 from a value of "3" to a value of "4".

A relay 170 is provided for controlling the operation of the switches 40, 42, 44 and 46 in Figure 3. In its deenergized state, the relay 170 actuates the ganged switches 40 and 42 to provide an indication of the voltage on the line 100 along the Y-axis. When the relay 170 becomes energized, it causes the switches 40 and 42 to become opened and the switches 44 and 46 to become closed so that the voltage on the line 100 is indicative of the position of contact between the tablet 10 and the membrane 30 along the X-axis. The relay 170 becomes energized by the passage of a signal through an AND network 172. The AND network 172 becomes activated at times corresponding to a count of "0" and "1" in the counter 148.

-12- 0097368

The counter 148 and the decoder 150 become reset to a value of "0" when the operator releases contact between the membrane 30 and the tablet 10. At such a time, a signal passes through an OR network 174 from a comparator 176. The comparator 176 compares the signal from the register 104 with preset signals from a preset register 178. The value preset into the register 178 is slightly less than the maximum value of the voltage from the voltage source 60 in Figure 4. In this way, signals are introduced to the counter 148 and the decoder 150 to reset these stages to a value of "0" when the voltage on the line 100 is slightly less than the voltage from the source 60. This indicates that a physical contact no longer exists between the tablet 10 and the membrane 30.

The outputs from the register 106 are introduced to an adder 180. The adder 180 accordingly adds, in successive clock cycles, the indications representing, in the register 106, the voltage on the line 100. The cumulative indications from the adder 180 are introduced to a register 182. The cumulative indications in the register 182 are shifted two (2) digital positions in the direction of least significance to divide the indications in the register by a value of "4". Such a shift is provided by introducing the gated clock signals 168 to a divider 184, which then introduces the clocks to the register 182.

The shifted signals from the register 182 are introduced to a register 184. The register 184 is enabled by signals from a one-shot 188 which is triggered by the decoder 150 when the decoder changes from a count of "1" to a count of "2" and from a count of "3" to a count of "4". This corresponds to the times when the indications on the line 100 for the positions of contact between the tablet 10 and the membrane 30 have been confirmed through N successive clock signals for each of the X and Y axes by the sequential tests specified above.

The triggering of the one-shot 188 also enables a divider 190 so that the digital information in the register 184 becomes transferred to the divider. The digital information in the divider 190 is divided by a preset number in a pre-set register 192. This causes the output from the divider 190 to represent the average of the successive values determined for the voltage on the line 100 in each of the N samples provided in the successive clock signals for each of the X and Y axes.

When the averaging in the divider 190 has been completed, a signal is introduced from the divider 190 to AND networks 194 and 196. The AND network 194 also receives the signals passing through an amplifier 197 and an inverter 198 from the AND network 172, and the AND network 196 receives the output directly from the AND network 172. In this way, the AND network 194 becomes activated when the system described above is activating a voltage on the line 100 in representation of the position of contact between the tablet 10 and the membrane 30 along the X-axis and the divider 190 has averaged the output voltage on the line 100 for the X-axis in N successive clock signals. Similarly, the AND network 196 becomes activated when the averaging has been completed by the divider 190 for the output voltage on the line 100 for the Y-axis in N successive clock signals and successive signals have been provided in representation of the position of contact between the tablet 10 and the membrane 30 along the Y-axis for N successive clock signals.

Upon an activation of the AND network 194, a register 198 is activated to receive the indications from the divider 190 in representation of the average output voltage on the line 100 for the X-axis in N successive clock signals. Similarly, a register 200 is activated to receive the indications from the divider 190 when the AND network 196 is activated. The signals received by the register 200 from the divider 190 represent the average output voltage on the line 100 for the Y-axis in N successive clock signals.

The indications in the registers 198 and 200 are introduced to a decoder 202 which in turn introduces the signals to a counter 204. The decoder 202 also receives signals from a digital register 206 which stores signals preset in a memory 208. The preset value in the memory 208 may be any suitable value such as the number "80". This number is introduced to the decoder 202 to provide a visual check for insuring in each cycle of operation that the system is operating properly.

In this way, the counter 204 provides successive indications of the number "80", the position of contact between the tablet 10 and the membrane 30 along the X-axis and the position of contact between the tablet and the membrane along the Y-axis. Upon each indication of the position of contact between the tablet 10 and the membrane 30 along the Y-axis, a one-shot 210 is triggered by a signal from the AND gate 196 to introduce a signal to the counter 204 to reset the counter for the next sequence of output indications.

As will be seen from the above discussion, the system of this invention operates in a simple and reliable manner to indicate the position of selection on a tablet along a pair of coordinate axes such a X and Y axes. This indication is obtained through the operation of a voltage dividing network and a voltage source having a floating reference potential and is further obtained through the inclusion of the tablet in the voltage dividing network and through the introduction to the voltage source of a reference potential dependent upon the position of contact between the tablet and an associated membrane. The invention is also operative to insure that output voltages will be produced only when the operator has produced a positive contact between the tablet and the membrane at the selected position for a particular period of time such as a period represented by N successive clock cycles.

Although this application has been disclosed and illustrated with reference to particular applications, the principles involved are susceptible of numerous other applications which will be apparent to persons skilled in the art. The invention is, therefore, to be limited only as indicated by the scope of the appended claims.

0097368

-16-

<u>CLAIMS</u>

1. An apparatus for indicating positions in two co-ordinate axes, comprising: a tablet having a surface providing a uniform resistivity across the tablet, means for establishing a ground at any particular position on said surface, a voltage source having a floating reference, means connected in a circuit with the voltage source and said surface for producing at the extremities of the tablet voltages dependent upon the paticular position grounded on the tablet, and means responsive to the voltages produced at particular extremities of the tablet along the two co-ordinate axes for indicating the grounded position on the tablet in the two co-ordinate axes.

2. The apparatus as claimed in Claim 1 wherein said circuitry means includes said particular surface and the ground established on said surface by contact between said surface and the ground-establishing means.

3. The apparatus as claimed in Claim 2, including, means for providing iterative tests of the grounded position on the tablet and for providing for the output indication by the indicating means when the voltage along each of the co-ordinate axes is within a particular percentage in successive iterations.

4. The apparatus as claimed in Claim 1, including means disposed on the tablet at spaced positions on the tablet for providing for the introduction of the voltage from the source only in a single vector in each of the two co-ordinate axes.

5. An appatatus for providing an indication of position along first and second co-ordinate axes, comprising: a tablet, a thin film disposed on the tablet for providing a uniform resistance across the tablet, means for providing a ground plane in facing relationship to the thin film, means associated with the tablet for providing for a progressive voltage only in a first particular direction along the first axis of the tablet in accordance with the

-17-

contact betwen the thin film and the ground plane, means associated with the tablet for providing for a progressive voltage only in a second particular direction along the second axis of the tablet in accordance with the contact between the thin film and the ground plane, and means responsive to the progressive voltages respectively produced along the first and second axes for indicating the position of contact between the ground plane and the thin film along the first and second axes.

6. The apparatus as claimed in Claim 5, wherein said ground plane providing means includes a thin film disposed on a flexible membrane and means for maintaining the flexible membrane in a spaced relationahip to the tablet and for providing for a contact between the thin film and the ground plane upon an application of pressure against the membrane.

7. The apparatus as claimed in Claim 1 wherein the indicating means includes means defining a voltage dividing network with the thin film and means operatively coupled to the thin film and the ground plane for defining the ground plane in the voltage dividing network in accordance with the position of contact between the thin film and the ground plane.

8. The apparatus as claimed in Claim 5 wherein the first means for producing the progressive voltage includes first unidirectional means for limiting the flow of current to the first particular direction and the second means for producing the progressive voltage includes second unidirectional means for limiting the flow of current only to the second particular direction.

9. The apparatus as claimed in Claim 3 wherein the first and second voltage-producing means include a voltage source having a floating voltage reference and having first and second output terminals and the indicating means include means defining a voltage dividing

-18-

network with the thin film and means for indicating the voltage produced on a particular one of the output terminals from the source when the ground plane contacts the thin film.

10. A method of indicating position along first and second co-ordinates, including the following steps: providing a tablet having a uniform coating of a resistive material on the tablet, providing a flexible ground plane in contiguous, but spaced, relationship to the resistive material on the tablet, flexing the ground plane into contact with the resistive material on the tablet at any desired position on the tablet, introducing the voltage across the tablet along the first and second co-ordinate axes to obtain output voltages in the two co-ordinate directions in accordance with the position of contact between the ground plane and the uniform coating on the tablet, providing iterative measurements of the voltage along each of the two co-ordinate axes to determine if any changes in such voltages in the successive iterations are within particular limits, and providing an output indication of the voltage along each of the two co-ordinate axes when any changes in such voltages along each axes in the successive iterations are within the particular limits.

11. The methods as claims in Claim 10 wherein the voltage is introduced across the tablet along a first one of the co-ordinate axes only in a single vector and the voltage is introduced across the tablet in the other co-ordinate axes only in a single vector.

12. A method as claimed in Claim 10 wherein the uniform coating on the tablet has a relatively low resistance and the ground plane is substantially conductive and wherein the successive interations of the voltage are performed only when the ground plane contacts the uniform coating.

**Fig.1**

**Fig.2**

**Fig.3**

$$>m \mid \overset{+m}{\underbrace{<m \mid \overset{0}{>}(-m)}} \overset{-m}{\mid} <(-m)$$
$$\underbrace{\qquad}_{140}$$

**Fig.7**

**Fig.4**

INDICATOR

VOLTAGE SOURCE

VOLTAGE

TIME →

**Fig.5**

**FIG. 6**